# EUROPEAN PATENT APPLICATION

(11) **EP 4 635 767 A1**
(43) Date of publication of application: **22.10.2025**
(21) Application number: 24759562.2
(22) Date of filing: 06.02.2024
(51) Int. Cl.: B60K 1/04, B60L 50/60, A01D 34/64, A01D 34/78

(54) **OUTDOOR WORK VEHICLE**

(30) Priority: 24.02.2023 CN 202310178199; 12.12.2023 CN 202323401922 U; 19.01.2024 CN 202410084830; 19.01.2024 CN 202410084320; 19.01.2024 CN 202410084368
(71) Applicant: Nanjing Chervon Industry Co., Ltd., Nanjing, Jiangsu 211106 (CN)
(72) Inventor: ZHANG, Min, Nanjing, Jiangsu 211106 (CN); WANG, Zhen, Nanjing, Jiangsu 211106 (CN); YAMAOKA, Toshinari, Nanjing, Jiangsu 211106 (CN); YANG, Jian, Nanjing, Jiangsu 211106 (CN); WANG, Lei, Nanjing, Jiangsu 211106 (CN); LI, Chenfei, Nanjing, Jiangsu 211106 (CN); ZHAO, Yueyue, Nanjing, Jiangsu 211106 (CN)
(74) Representative: Sun, Yiming
(86) International application number: PCT/CN2024/076214
(87) International publication number: WO 2024/174885

(57) **Abstract**

Provided is an outdoor work vehicle including a walking wheel group including a first walking wheel and a second walking wheel; a frame connected to the first walking wheel and the second walking wheel; a support mounted to the frame and configured to support an operator; a walking motor having a drive shaft and configured to drive the walking wheel group; and a first energy storage device including a first energy storage unit and a second energy storage unit; where the first energy storage unit and the second energy storage unit are located between the first walking wheel and the second walking wheel and in a region on the rear side of the walking motor and have different energy. The outdoor work vehicle has a strong discharge capability and strong endurance during outdoor working.

## Description

This application claims priority to Chinese Patent Application No. 202310178199.6 filed with the China National Intellectual Property Administration (CNIPA) on Feb. 24, 2023, Chinese Patent Application No. 202323401922.7 filed with the CNIPA on Dec. 12, 2023, Chinese Patent Application No. 202410084830.0 filed with the CNIPA on Jan. 19, 2024, Chinese Patent Application No. 202410084320.3 filed with the CNIPA on Jan. 19, 2024, and Chinese Patent Application No. 202410084368.4 filed with the CNIPA on Jan. 19, 2024, the disclosures of which are incorporated herein by reference in their entireties.

### TECHNICAL FIELD

The present application relates to an outdoor work vehicle and, in particular, to an electric mower.

### BACKGROUND

Outdoor work vehicles are used for working outdoors, such as a utility vehicle, an agricultural machinery vehicle, a utility terrain vehicle, a dune buggy, a golf cart, and a mower. When working outdoors, these devices need to carry some energy storage devices. The energy storage devices of the existing outdoor work vehicles may be basically divided into two types: one type of energy storage device is gasoline, diesel, or another fuel, and the other type of energy storage device is an electrical energy storage device. The electrical energy storage device is more environmentally friendly and energy-efficient than the fuel and thus has been more popular with users and manufacturers in recent years.

However, the existing electrical energy storage device of the outdoor work vehicles is generally a built-in and fixedly mounted stationary battery. Such an energy storage device limits the maximum energy storage capacity of the outdoor work vehicles. Especially for professional users, the outdoor work vehicles have too single functions to satisfy the requirements of the professional users for working outdoors for a relatively long time and for various work contents.

For example, as a garden tool, the mower is widely applied to the fields including lawn and vegetation trimming. In addition to lawn trimming, the professional users need to trim branches and weeds besides shrubs, blow fallen leaves, and fulfill other tasks in the working process. To solve the above problem of a lack of electrical energy, the existing mower is equipped with multiple battery packs. Mounting positions of the battery packs bring about changes in the center of gravity, appearance, and size of the whole machine, the convenience for the users to get on and off the vehicle, and other problems.

It is to be noted that the content described in the background of the present application is not necessarily the related art.

### SUMMARY

To overcome the shortcomings of the related art, an object of the present application is to provide an outdoor work vehicle that enables a user to work outdoors for a relatively long time and handle various tasks more flexibly and conveniently. The outdoor work vehicle has a relatively strong discharge capability and relatively strong endurance.

To achieve the preceding object, the present application adopts the technical solutions below. An outdoor work vehicle includes a walking wheel group including rear walking wheels and front walking wheels, where the rear walking wheels include a first rear walking wheel and a second rear walking wheel; a frame connected to the walking wheel group; a support mounted to the frame and configured to support an operator; a walking motor having a drive shaft and configured to drive the walking wheel group; and a first energy storage device including at least one first energy storage unit and at least one second energy storage unit. Each of the at least one first energy storage unit and each of the at least one second energy storage unit are located between the first rear walking wheel and the second rear walking wheel and in a region on the rear side of the walking motor and have different energy.

In some examples, the at least one first energy storage unit is disposed on the rear side of the at least one second energy storage unit in a front and rear direction.

In some examples, the at least one second energy storage unit is disposed on the left or right side of the at least one first energy storage unit in a left and right direction.

In some examples, energy of each of the at least one first energy storage unit is greater than or equal to energy of each of the at least one second energy storage unit.

In some examples, a second energy storage device is further included, where the second energy storage device is at least detachably and electrically connected to the outdoor work vehicle and configured to be detachable from the outdoor work vehicle to supply power to an external electric device.

In some examples, the second energy storage device is at least partially disposed above the walking wheel group.

In some examples, the second energy storage device is at least partially disposed on the front or rear side of an axle between the first rear walking wheel and the second rear walking wheel.

In some examples, the second energy storage device is at least partially disposed below the support.

In some examples, the second energy storage device includes a third energy storage unit, and the third energy storage unit has less energy than each of the at least one first energy storage unit.

In some examples, energy of the third energy storage unit is less than or equal to energy of each of the at least one second energy storage unit.

In some examples, the at least one first energy storage unit is capable of supplying power to at least the third energy storage unit or the walking motor.

In some examples, each of the at least one first energy storage unit includes a battery pack whose energy is greater than or equal to 1.5 kWh, and each of the at least one second energy storage unit or the third energy storage unit includes a battery pack whose energy is greater than or equal to 0.1 kWh.

In some examples, the first energy storage device is configured to charge the second energy storage device while supplying power to the walking motor.

In some examples, a first receiving region for receiving the first energy storage device and a second receiving region for receiving the second energy storage device are further included, where the second energy storage device is configured to be forbidden from discharging when accommodated in the second receiving region.

In some examples, a first circuit board assembly and a second circuit board assembly are further included, where the first circuit board assembly is configured to at least control operation of the walking motor, the second circuit board assembly includes a power management module, and a projection of the first circuit board assembly on a first plane supporting the walking wheel group at least partially coincides with a projection of the second circuit board assembly on the first plane.

An outdoor traveling device includes a walking wheel group including a first walking wheel and a second walking wheel; a frame connected to the first walking wheel and the second walking wheel; a support mounted to the frame and configured to support an operator; a walking motor for driving the walking wheel group; and a first energy storage device including multiple first energy storage units configured to at least supply electrical energy to the walking motor. The first energy storage device is at least partially located between the first walking wheel and the second walking wheel; the multiple first energy storage units are arranged in different manners; and energy of at least one of the multiple first energy storage units is greater than or equal to 1.5 kWh.

In some examples, a second energy storage device is further included, where the second energy storage device is at least detachably and electrically connected to the outdoor work vehicle and configured to be detachable from the outdoor work vehicle to supply power to an external electric device.

In some examples, a projection of the second energy storage device in an up and down direction does not overlap a projection of an axle in the up and down direction.

In some examples, the second energy storage device is configured to be detachable from the outdoor work vehicle to supply power to the external electric device.

In some examples, at least one of the multiple first energy storage units is detachably mounted to the outdoor work vehicle.

### BRIEF DESCRIPTION OF DRAWINGS

FIG. 1 is a perspective view of an outdoor work vehicle as an example of the present application.
FIG. 2 is a top view of the outdoor work vehicle of FIG. 1.
FIG. 3 is a perspective view of part of the structure of the outdoor work vehicle of FIG. 1.
FIG. 4 is a view of a position relationship between a first energy storage device, a walking assembly, and walking motors of the outdoor work vehicle of FIG. 1.
FIG. 5 is a perspective view of a first energy storage device of the outdoor work vehicle of FIG. 1.
FIG. 6 is a view of another position relationship between a first energy storage device, a walking assembly, and walking motors of the outdoor work vehicle of FIG. 1.
FIG. 7A is a perspective view of the first energy storage device of the outdoor work vehicle of FIG. 6.
FIG. 7B is a schematic diagram of another example of the first energy storage device of the outdoor work vehicle of FIG. 6.
FIG. 8A is a schematic view of another position of a second energy storage device of the outdoor traveling device of FIG. 3.
FIG. 8B is a schematic view of other positions of a second energy storage device of the outdoor traveling device of FIG. 3.
FIG. 9 is a perspective view of an outdoor work vehicle as an example of the present application.
FIG. 10 is a perspective view of a second energy storage device of the outdoor work vehicle of FIG. 9.
FIG. 11 is a perspective view of a circuit board assembly of the outdoor work vehicle of FIG. 1.
FIG. 12 is a perspective view of a flipped state of the circuit board assembly of FIG. 11.
FIG. 13 is a perspective view of a mowing circuit board assembly.
FIG. 14 is an exploded view of part of the structure of the mowing circuit board assembly of FIG. 13.
FIG. 15 is a perspective view of a mowing tractor according to another example.
FIG. 16 is a schematic view of positions of energy storage devices of the mowing tractor of FIG. 15.
FIG. 17 is a plan view of a first energy storage device and a second energy storage device of FIG. 16 mounted in a front housing assembly.
FIG. 18 is a plan view of another arrangement of a first energy storage device and a second energy storage device of FIG. 16 mounted in a front housing assembly.
FIG. 19 is a plan view of another arrangement of a first energy storage device and a second energy storage device of FIG. 16 mounted in a front housing assembly.
FIG. 20 is a plan view of another arrangement of a first energy storage device and a second energy storage device of FIG. 16 mounted in a front housing assembly.
FIG. 21 is a position schematic of an arrangement of a first energy storage device and a second energy storage device of FIG. 16.
FIG. 22 is a position schematic of another arrangement of a first energy storage device and a second energy storage device of FIG. 16.
FIG. 23 is an electrical schematic of a first energy storage device charging a second energy storage device according to an example of the present application.
FIG. 24 is an electrical schematic of a charging management module according to an example of the present application.
FIG. 25 is a flowchart of a control method for charging a second energy storage device by a first energy storage device according to an example of the present application.
FIG. 26 is a top view of a position of a control assembly of an outdoor traveling device according to an example of the present application.
FIG. 27 is an interior schematic of the control assembly of the outdoor traveling device of FIG. 26.
FIG. 28 is a schematic view of a power busbar assembly in the control assembly of the outdoor traveling device of FIG. 26.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

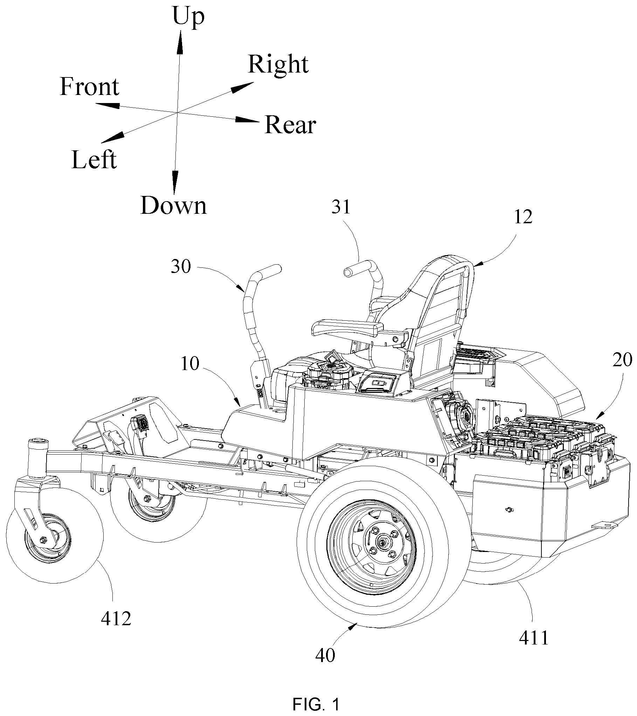

As shown in FIG. 1, the present application discloses an outdoor work vehicle 100 for a user to sit or stand on and operate to trim a lawn and other vegetation. In the specification, front, rear, left, right, up, and down are described as directions shown in FIG. 1. Specifically, when the user sits or stands on the outdoor work vehicle 100 on the ground, it is defined that the direction which the user faces is front, the direction which the user faces away from is rear, the direction on the left-hand side of the user is left, the direction on the right-hand side of the user is right, the direction towards the ground is down, and the direction away from the ground is up.

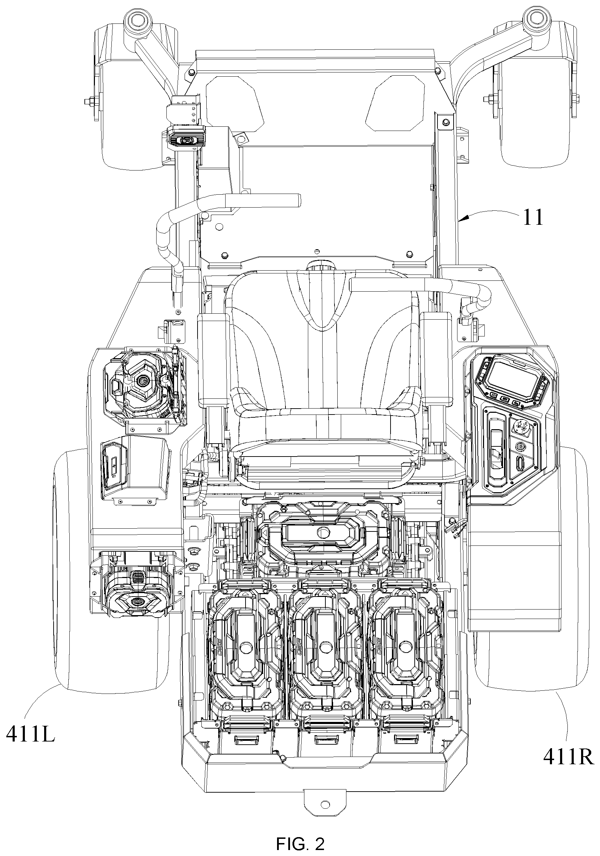

As shown in FIGS. 1 to 4, the outdoor work vehicle 100 includes a housing assembly 10, an energy storage device 20, a mowing assembly, a walking assembly 40, and a frame 11. The frame 11 extends substantially along a front and rear direction and constitutes a body of the outdoor work vehicle 100 together with the housing assembly 10. The energy storage device 20 is used for supplying energy to the mowing assembly, the walking assembly 40, and the like so that the electric mowing device can be used as a power tool. The electric mowing device is more environmentally friendly and energy-efficient than a fuel-based riding mower.

In some examples, the walking assembly 40 includes a walking wheel group 41 and a walking motor 42. The walking wheel group 41 is connected to the body to support the body. The walking wheel group 41 can at least drive the outdoor work vehicle 100 to walk along the front and rear direction. The walking wheel group 41 includes rear walking wheels 411 and front walking wheels 412. The rear walking wheels 411 include a first rear walking wheel 411L and a second rear walking wheel 411R. The walking motor 42 drives the rear walking wheels 411 or the front walking wheels 412 to rotate so that the outdoor work vehicle 100 can walk on the ground. In some examples, two walking motors 42 may be provided, and the two walking motors 42 drive the first rear walking wheel 411L and the second rear walking wheel 411R, respectively so that the outdoor work vehicle 100 can turn in other directions deviating from the front and rear direction.

The outdoor work vehicle 100 further includes a functional assembly for implementing a tool function and a drive motor for driving the functional assembly. In this example, the outdoor work vehicle 100 is a riding mower, the functional assembly is specifically the mowing assembly, the mowing assembly includes a mowing element for cutting the lawn, and the drive motor drives the mowing element to rotate. Structures and positions of the mowing assembly and the drive motor are conventional settings in the art and are not repeated in the present application.

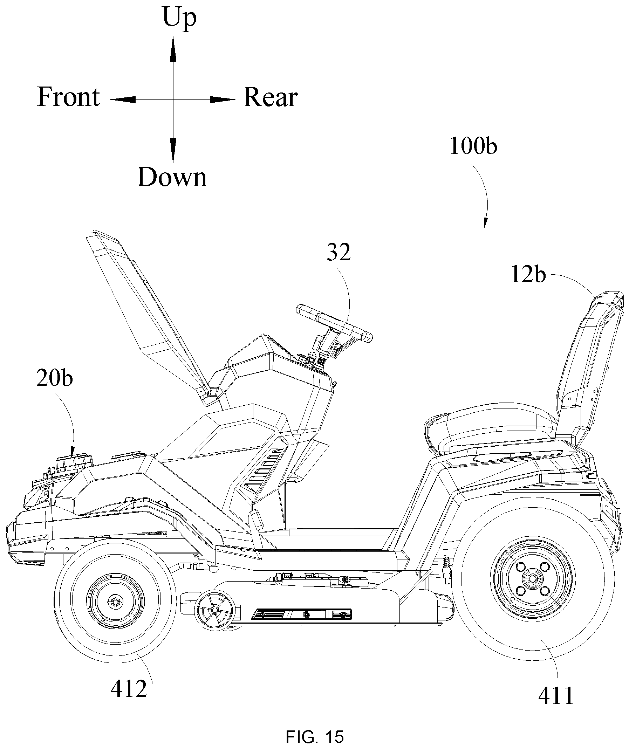

The outdoor work vehicle 100 may be used for the user to sit or stand on. The user may operate the outdoor work vehicle 100 to trim the lawn and vegetation while controlling the outdoor work vehicle 100 to walk. The outdoor work vehicle 100 further includes a support 12 for supporting the user. In some examples, the support 12 may be a seat or a platform for the user to stand on. The support 12 is mounted to the frame 11. In this example, the outdoor work vehicle 100 further includes an operating assembly 30, and the operating assembly 30 includes an operating rod assembly 31 for the user to operate to control the riding mower to advance, reverse, and turn. In some examples, the operating assembly 30 may also include a steering wheel assembly 32 shown in FIG. 15.

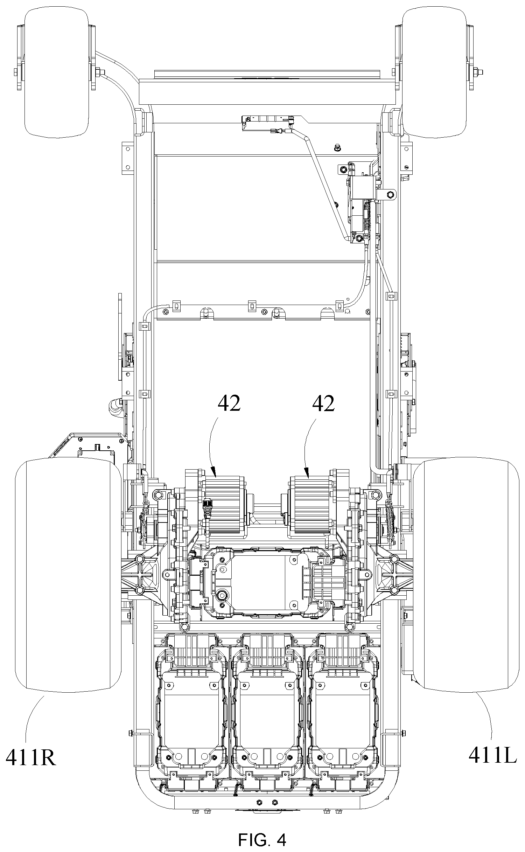

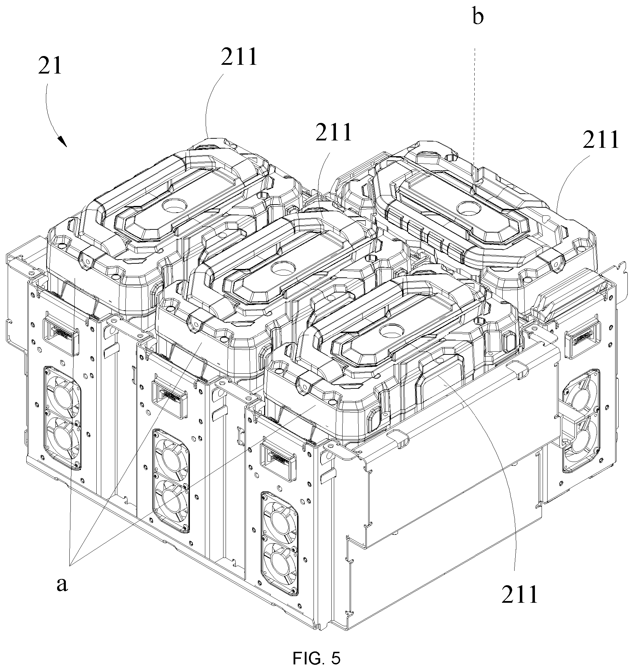

As shown in FIGS. 4 and 5, in some examples, the energy storage device 20 of the outdoor work vehicle 100 includes a first energy storage device 21. In a left and right direction, the first energy storage device 21 is at least partially disposed between the first rear walking wheel 411L and the second rear walking wheel 411R. The first energy storage device 21 is at least partially disposed on the rear side of the support 12. The first energy storage device 21 includes multiple first energy storage units 211, and the multiple first energy storage units 211 are arranged in different manners. In some examples, the multiple first energy storage units 211 are arranged in two manners, which are an arrangement manner a and an arrangement manner b, respectively. In this example, the multiple first energy storage units 211 have substantially the same size. Of course, the multiple first energy storage units 211 may have the same energy or different energy. Specifically, a first energy storage unit 211 includes lithium iron phosphate cells. Of course, the first energy storage unit may be selected from a nickel-cadmium battery or made of materials such as graphene, so as to achieve a combination of different battery characteristics. In this example, the first energy storage unit 211 is a battery pack whose energy is greater than or equal to 1.5 kWh. In some examples, the first energy storage unit 211 is a battery pack whose energy is greater than or equal to 3 kWh. In some examples, the first energy storage unit 211 is a battery pack whose energy is greater than or equal to 4 kWh. In some examples, the first energy storage unit 211 and a second energy storage unit 212 each have a rated voltage greater than or equal to 40 V and less than or equal to 80 V.

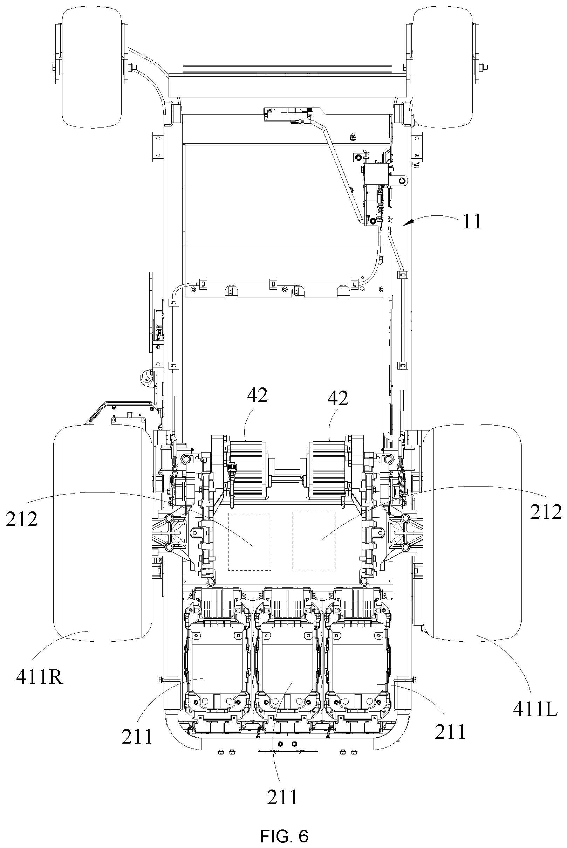

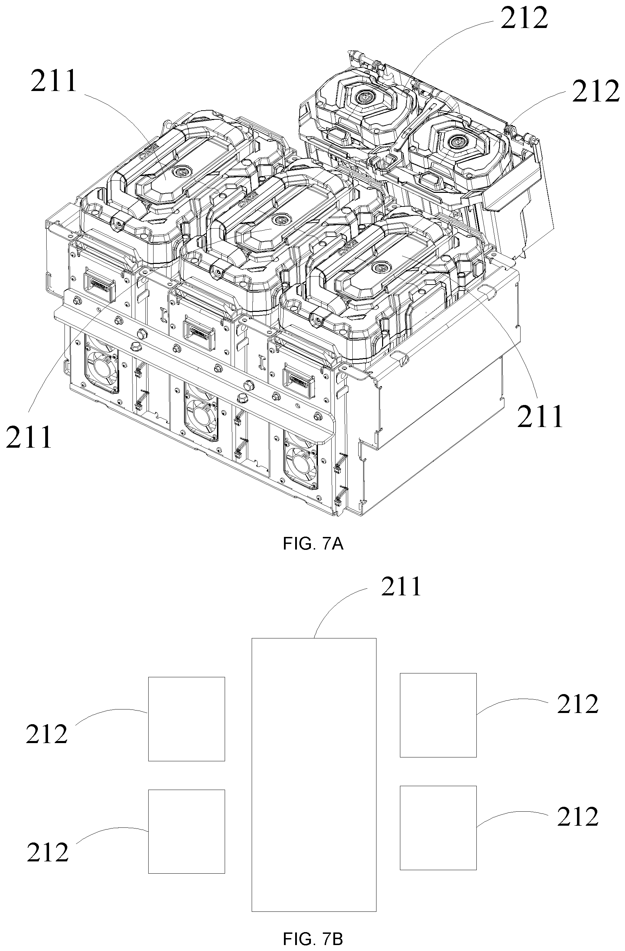

As shown in FIGS. 6 and 7A, in some examples, the energy storage device 20 of the outdoor work vehicle 100 includes the first energy storage device 21. The first energy storage device 21 includes the first energy storage unit 211 and the second energy storage unit 212. The energy of the first energy storage unit 211 is different from the energy of the second energy storage unit 212. The energy of the first energy storage unit 211 is greater than the energy of the second energy storage unit 212. In some examples, the first energy storage device 21 is at least partially disposed on the rear side of the support 12. In some examples, in the left and right direction, the first energy storage device 21 is at least partially disposed between the first rear walking wheel 411L and the second rear walking wheel 411R. In this example, the first energy storage unit 211 and the second energy storage unit 212 are located between the first rear walking wheel 411L and the second rear walking wheel 411R and in a region on the rear side of the walking motor 42 and have different energy. In some examples, one or more first energy storage units 211 or second energy storage units 212 may be provided. Multiple first energy storage units 211 may be arranged substantially along the front and rear direction or the left and right direction or may be arranged substantially along an up and down direction. Multiple second energy storage units 212 may be arranged substantially along the front and rear direction or the left and right direction or may be arranged substantially along the up and down direction. The energy of the first energy storage unit 211 is greater than the energy of the second energy storage unit 212. In some examples, as shown in FIG. 7B, multiple second energy storage units 212 are arranged on two sides of the first energy storage unit 211.

In the preceding example, the first energy storage unit 211 is a battery pack whose energy is greater than or equal to 1.5 kWh. In some examples, the first energy storage unit 211 is a battery pack whose energy is greater than or equal to 3 kWh. In some examples, the first energy storage unit 211 is a battery pack whose energy is greater than or equal to 4 kWh. In some examples, the second energy storage unit 212 is a battery pack whose energy is greater than or equal to 0.1 kWh. In some examples, the second energy storage unit 212 is a battery pack whose energy is greater than or equal to 0.4 kWh. In some examples, the second energy storage unit 212 is a battery pack whose energy is greater than or equal to 0.6 kWh. Of course, the first energy storage unit 211 and the second energy storage unit 212 may have the same energy or different energy. In this example, the first energy storage unit 211 has lithium iron phosphate cells, and the second energy storage unit 212 has lithium cells, is a nickel-cadmium battery, or is made of graphene or other materials, so as to achieve a combination of different battery characteristics. In some examples, the first energy storage unit 211 may be a supercapacitor, also referred to as an electrochemical capacitor. In some examples, the first energy storage unit 211 and the second energy storage unit 212 each have a rated voltage greater than or equal to 40 V and less than or equal to 80 V.

In the preceding examples, the type, arrangement manner, arrangement, and capacity of the first energy storage device 21 are designed. It is to be understood that the first energy storage device 21 including the first energy storage unit 211 and the second energy storage unit 212 is mainly applied to power supply to the outdoor work vehicle 100 to satisfy the requirement for normal operation of the device. Of course, the second energy storage unit 212 can be removed from the outdoor work vehicle 100 to supply power to an external powered device.

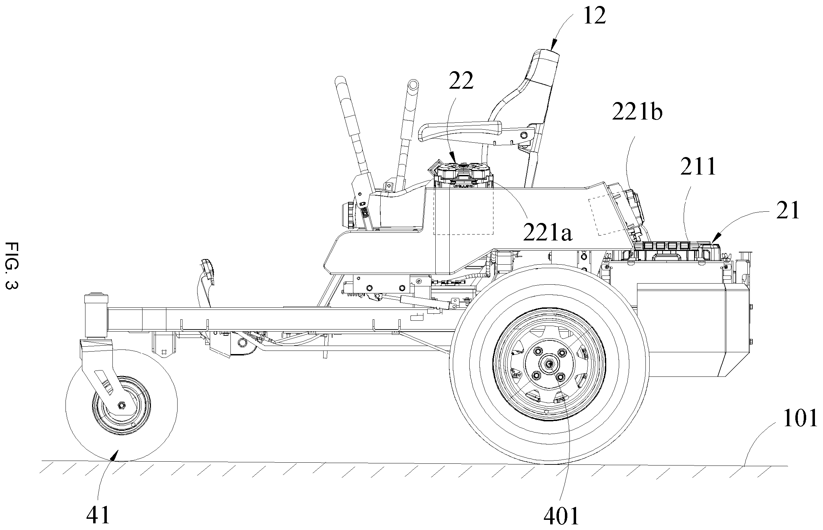

As shown in FIG. 3, in some examples, the energy storage device 20 of the outdoor work vehicle 100 includes a second energy storage device 22 in addition to the first energy storage device 21. The first energy storage device 21 has a first characteristic, and the second energy storage device 22 has a second characteristic different from the first characteristic. The first characteristic and the second characteristic include energy characteristics, chemical properties, and physical dimension characteristics.

The first energy storage device 21 includes at least one first energy storage unit 211 having the first characteristic. Specifically, in the front and rear direction, the first energy storage device 21 is at least partially disposed on the rear side of the support 12. In the left and right direction, the first energy storage device 21 is at least partially disposed between the first rear walking wheel 411L and the second rear walking wheel 411R. The second energy storage device 22 includes at least one third energy storage unit 221a having the second characteristic. A projection of the second energy storage device 22 in the up and down direction does not overlap a projection of an axle 401 between the rear walking wheels 411 in the up and down direction. In some examples, a projection of the third energy storage unit 221a in the up and down direction does not overlap the projection of the axle 401 between the rear walking wheels 411 in the up and down direction. In some examples, the projection of the third energy storage unit 221a in the up and down direction is located on the front side of the projection of the axle 401 between the rear walking wheels 411 in the up and down direction. In some examples, in the up and down direction, the distance from a lowest point of the third energy storage unit 221a to the ground plane is less than or equal to the diameter of the first rear walking wheel 411L or the second rear walking wheel 411R. The distance is to be understood as a distance in the case where the walking wheel group is supported on the ground. In some examples, the second energy storage device 22 may include multiple third energy storage units 221a which are symmetrically disposed on two sides of the outdoor work vehicle 100 relative to the support 12.

In some examples, the third energy storage unit 221a includes a lithium-cell battery. The third energy storage unit 221a is a battery pack whose energy is greater than or equal to 0.1 kWh. In some examples, the third energy storage unit 221a is a battery pack whose energy is greater than or equal to 0.4 kWh. In some examples, the third energy storage unit 221a is a battery pack whose energy is greater than or equal to 0.6 kWh.

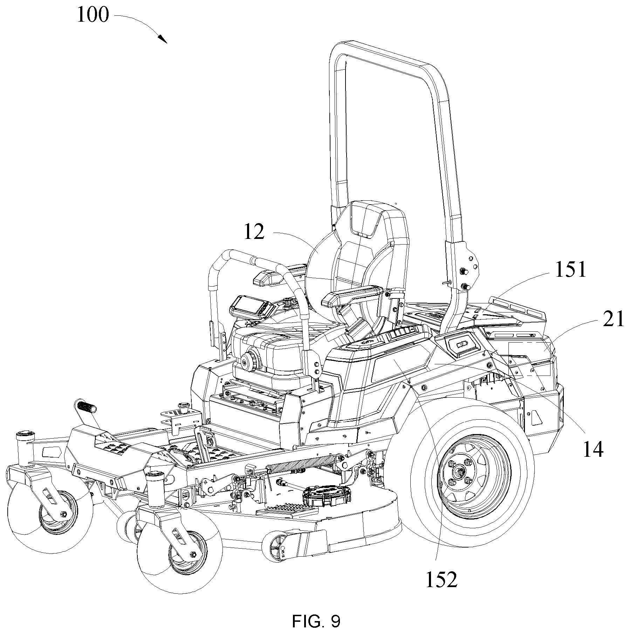

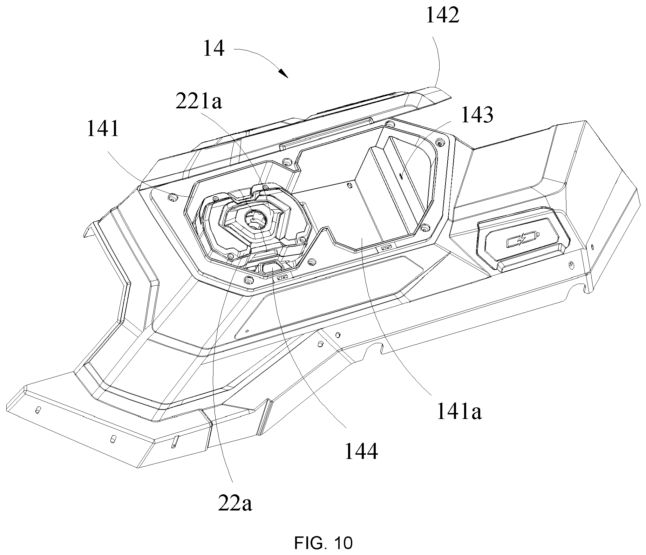

Specifically, as shown in FIGS. 9 and 10, the housing assembly 10 includes a left housing assembly 14 and a right housing assembly disposed on the left and right sides of the support 12. In some examples, the left housing assembly 14 includes at least one storage box 141, and the storage box 141 is formed with a storage space 141a capable of accommodating articles. The left housing assembly 14 further includes a flip cover 142 disposed above the storage box 141 so that some articles to be prevented from water and dust can be placed in the storage box. The storage box 141 and the flip cover 142 are provided with attachment devices enabling the flip cover 142 to seal the storage box 141, where the attachment devices may be magnets. In some examples, a coupling portion 144 for coupling the third energy storage unit 221a is connected to the storage box 141. When the user inserts the third energy storage unit 221a into the storage box 141, the third energy storage unit 221a can obtain electrical energy from the first energy storage device 21. In some examples, a Universal Serial Bus (USB) interface 143 is also provided in the storage box 141 so that a device such as a mobile phone can be charged. In some examples, the coupling portion 144 for connecting the third energy storage unit 221a is disposed in a front portion of the storage box 141, and the USB interface 143 is disposed at the rear end of the storage box 141. After accommodating the third energy storage unit 221a, the storage space 141a may also have spare space for placing personal articles of the user such as the mobile phone and keys. Of course, when the user connects the mobile phone to the USB interface 143 to charge the mobile phone, the mobile phone may be placed in the storage space 141a and the flip cover 142 may be covered. In some examples, the flip cover 142 is provided with a transparent or translucent visualization region 144, and the user can observe situations in the storage space 141a through the visualization region 144, such as a charged state of the third energy storage unit 221a and an incoming call of the mobile phone.

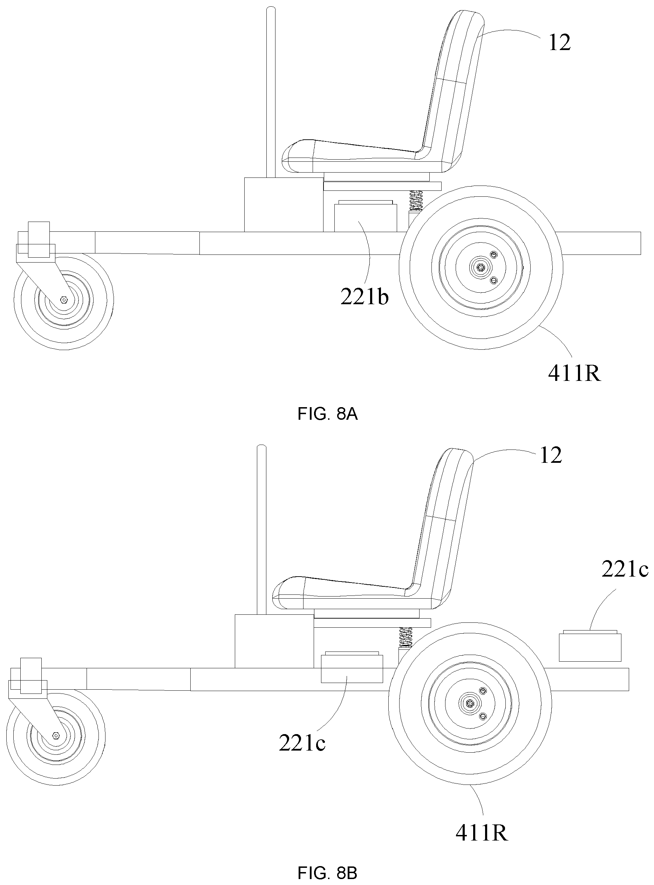

The second energy storage device may be pluggably mounted at other positions to facilitate the access of the user without affecting the user's getting on and off the vehicle. In some examples, referring to FIG. 8A, the second energy storage device 22 further includes a third energy storage unit 221b disposed below the support 12. The number of third energy storage units 221b may be set freely. In this manner, the space below the seat can be fully utilized. After the third energy storage unit 221b is mounted to the support 12, the distance from the lowest point of the third energy storage unit 221b to the ground plane is less than or equal to the diameter of the first rear walking wheel 411L.

In some examples, referring to FIG. 8B, the second energy storage device 22 further includes a third energy storage unit 221c, the third energy storage unit 221c is substantially located on the radially outer side of the first rear walking wheel 411L or the second rear walking wheel 411R, and the distance from the lowest point of the third energy storage unit 221c to the ground plane is less than or equal to the diameter of the first rear walking wheel 411L.

In the examples disclosed in the present application, the total energy of the first energy storage device 21 is greater than the total energy of the second energy storage device 22, and the total capacity of the first energy storage device 21 is also greater than the total capacity of the second energy storage device. In some examples, the total energy of the first energy storage device is greater than or equal to 1 kWh and less than or equal to 50 kWh. In some examples, the total energy of the first energy storage device is greater than or equal to 1 kWh and less than or equal to 40 kWh. In some examples, the total energy of the first energy storage device is greater than or equal to 1 kWh and less than or equal to 30 kWh.

In some examples, the first energy storage device 21 is configured to supply power to the walking motor 42, and the second energy storage device is configured to supply power to the walking motor 42. The first energy storage device 21 is further configured to supply power to the drive motor for driving a blade to rotate, and the second energy storage device is further configured to supply power to the drive motor. In some examples, the first energy storage device 21 can simultaneously supply power to the walking motor 42 and the drive motor, and the second energy storage device 22 supplies power to only the walking motor 42 and does not supply power to the drive motor. In some examples, the first energy storage device 21 simultaneously supplies power to the walking motor 42 and the drive motor, and the second energy storage device 22 supplies power to only the drive motor. In some examples, the first energy storage device 21 is configured to supply power to the drive motor, and the second energy storage device 22 is configured not to supply power to the drive motor.

In some examples, the second energy storage device 22 has a USB interface to output a direct current for charging a device such as the mobile phone. In some examples, the second energy storage device 22 further has an alternating current output interface to supply power to an alternating current device such as an induction cooker. In some examples, the second energy storage device 22 is connected to an external conversion device to provide an AC for an external device.

In the preceding examples, the total energy of the first energy storage device 21 is greater than the total energy of the second energy storage device. The structures and energy of the first energy storage device 21 and the second energy storage device 22 are set such that the advantages of a large-energy power supply and a conveniently detachable power supply are both achieved, and the problems of inflexibility of the large-energy power supply and small energy of the detachable power supply can be solved, thereby improving the battery lifetime and power supply flexibility of the outdoor work vehicle 100.

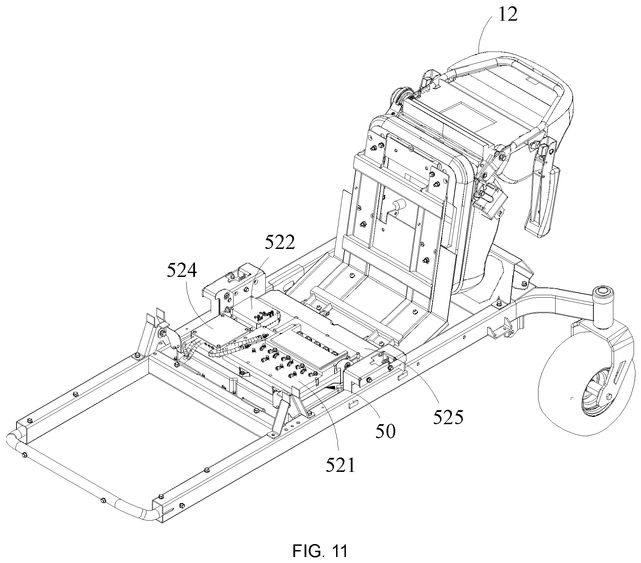

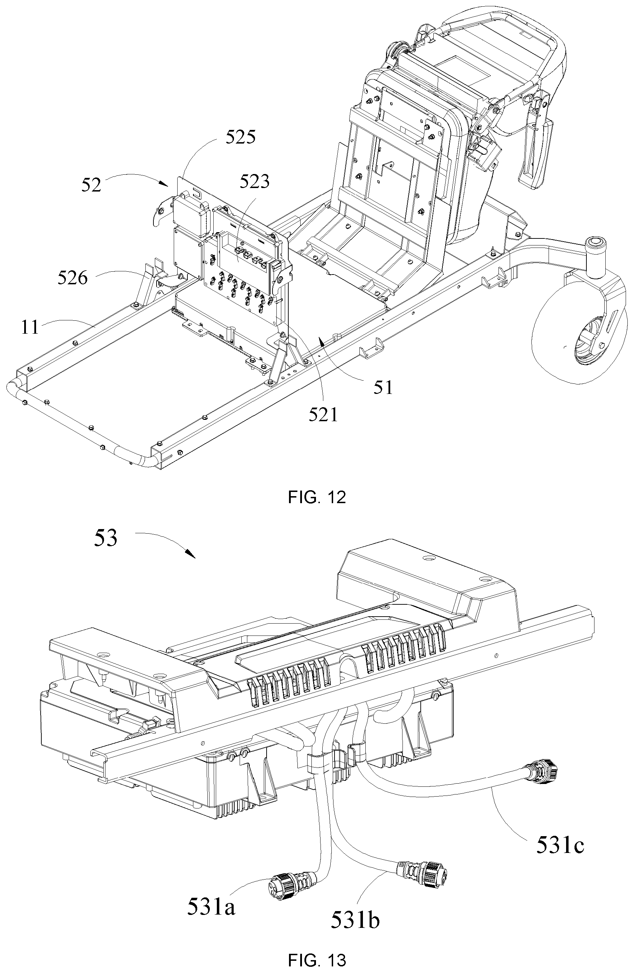

Referring to FIGS. 11 and 12, the outdoor work vehicle 100 further includes a circuit board assembly 50 located at least partially below the support 12. The circuit board assembly 50 includes a first circuit board assembly 51 and a second circuit board assembly 52. The first circuit board assembly is configured to at least control operation of the walking motor 42. The second circuit board assembly 52 includes a power management module 521 connected to at least the energy storage device. The first circuit board assembly 51 and the second circuit board assembly 52 at least partially overlap in the up and down direction. In some examples, a projection of the first circuit board assembly 51 on a first plane 101 supporting the walking wheel group 41 (as shown in FIG. 3) at least partially coincides with a projection of the second circuit board assembly 52 on the first plane 101. In some examples, the second circuit board assembly 52 includes the power management module 521 including a discharge unit, a charging unit, an electrical energy output port, a charging interface, and a controller. The discharge unit is electrically connected to the first energy storage device 21 and the walking motor 42 so that the first energy storage device 21 supplies power to the walking motor 42. The second circuit board assembly 52 further includes a first power conversion circuit 522, a second power conversion circuit 523, and a fuse box 524. The first power conversion circuit 522 is used for outputting a direct current of 15 V, and the second power conversion circuit 523 is used for outputting a direct current of 40 V to 60 V.

In some examples, the second circuit board assembly 52 further includes a mounting bracket 525 forming a mounting plane for mounting a printed circuit board of the second circuit board assembly 52. The mounting bracket 525 has at least a first position shown in FIG. 11 and a second position shown in FIG. 12. When the mounting bracket 525 is configured to switch from the first position to the second position, the second circuit board assembly 52 can be flipped relative to the first circuit board assembly 51. In this manner, when the first circuit board assembly 51 and the second circuit board assembly 52 are partially stacked below the support 12, if the first circuit board assembly 51 fails, the second circuit board assembly 52 can be removed by simply operating the mounting bracket 525, thereby facilitating operations such as maintenance or detachment of the first circuit board assembly 51.

In some examples, the mounting bracket 525 is rotatably connected to the frame 11 via a base 526. An illustrative example is provided in the present application, and those skilled in the art can employ other structures such that the second circuit board assembly has different positions to facilitate maintenance of both the first circuit board assembly and the second circuit board assembly.

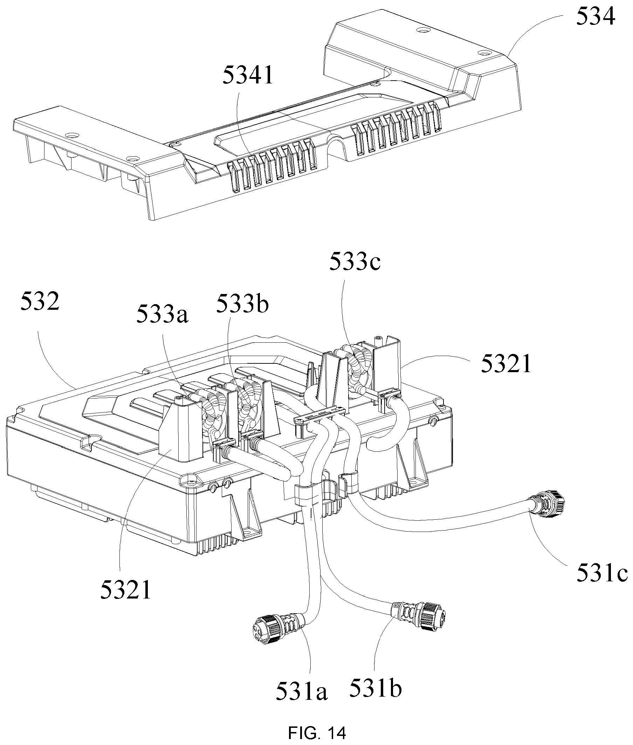

As shown in FIGS. 13 and 14, the outdoor work vehicle 100 further includes a circuit board assembly 53 for driving the mowing assembly. The circuit board assembly 53 is substantially disposed below the support 12. Specifically, the mowing assembly includes the drive motor and a mowing blade driven by the drive motor. In some examples, the circuit board assembly 53 may be integrated with or separated from the first circuit board assembly 51 in the preceding example. In this example, three drive motors are provided, and the three drive motors are connected to a power line 531a, a power line 531a, and a power line 531a, respectively.

The circuit board assembly 53 includes a housing 532 and a magnetic ring 533a, a magnetic ring 533b, and a magnetic ring 534c which are fixedly mounted on a surface of the housing 532. Specifically, the magnetic ring 533a is sleeved on the power line 531a, the magnetic ring 533b is sleeved on the power line 531b, and the magnetic ring 533c is sleeved on the power line 531c. In some examples, fixing members 5321 for mounting the magnetic ring 533a, the magnetic ring 533b, and the magnetic ring 533c are formed on or connected to the surface of the housing 532. In some examples, a cover plate 534 is further provided above the magnetic ring 533b, and the cover plate 534 and the housing 532 form an accommodation space for accommodating the magnetic ring 533a, the magnetic ring 533b, and the magnetic ring 533c. In this example, an air inlet 5341 and an air outlet are formed on the cover plate 534 to perform heat dissipation on the magnetic ring 533a, the magnetic ring 533b, and the magnetic ring 533c.

In some examples, to further improve an anti-interference capability of circuits, a power input terminal of the circuit board assembly 53 is also provided with a magnetic ring and a magnetic ring mounting portion. Specifically, the magnetic ring mounting portion is disposed on a side of the housing 532 facing away from the fixing members 5321.

FIG. 15 shows another outdoor work vehicle 100b which is specifically a mowing tractor. This example differs from the preceding example in that an energy storage device 20b is at least partially disposed on the front side of a support 12b. It is to be understood that since the overall layout of the outdoor work vehicle 100b changes, a position of the support 12b in a front and rear direction changes accordingly.

The outdoor work vehicle 100b includes a walking assembly consisting of rear walking wheels 411 and front walking wheels 412. The outdoor work vehicle 100b includes a front housing assembly 13b for accommodating the energy storage device 20b. The energy storage device 20b includes a first energy storage device 21b and a second energy storage device 22b. The first energy storage device 21b has a first characteristic, and the second energy storage device 22b has a second characteristic different from the first characteristic. The first characteristic and the second characteristic include energy characteristics, physical characteristics, and chemical properties. Specifically, the first energy storage device 21b includes at least one battery consisting of lithium iron phosphate cells, and the second energy storage unit 22b includes at least one battery consisting of lithium cells.

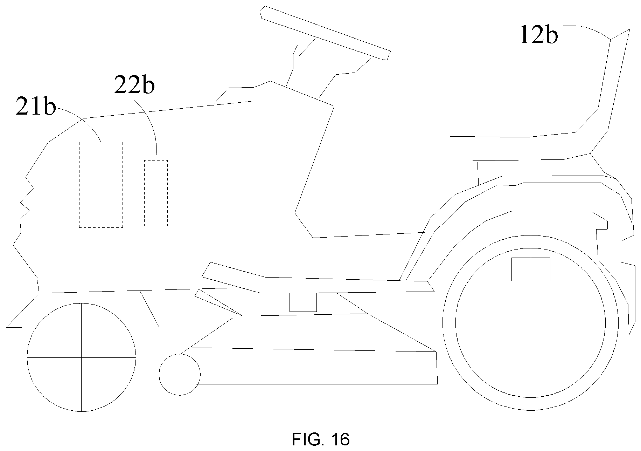

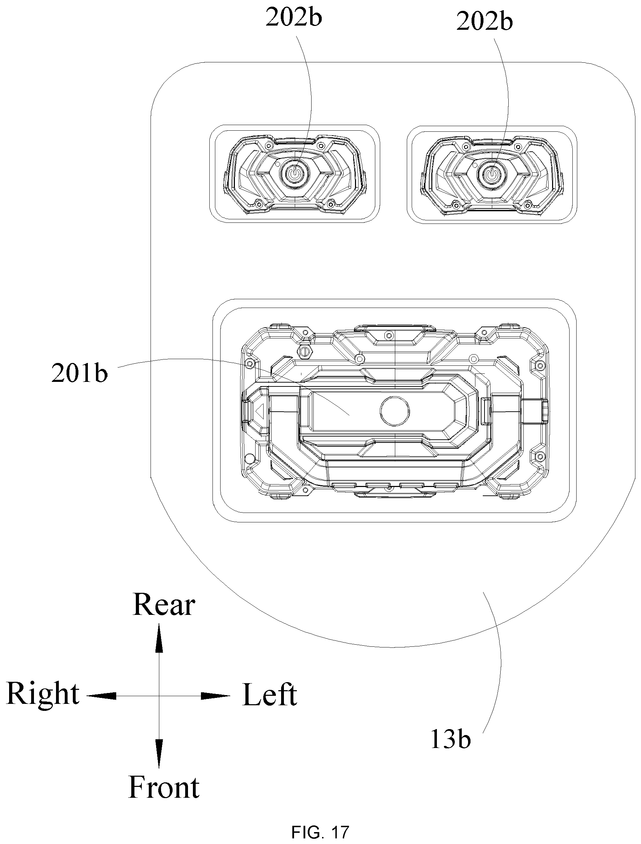

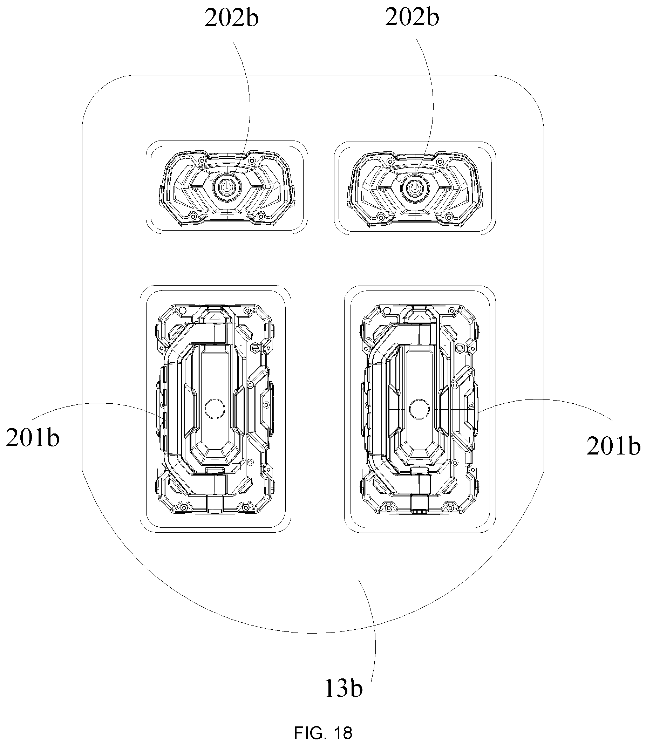

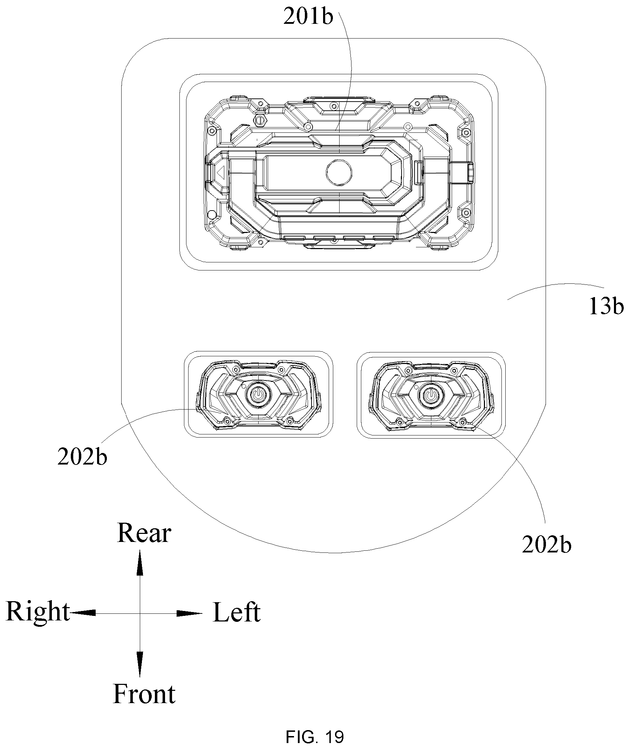

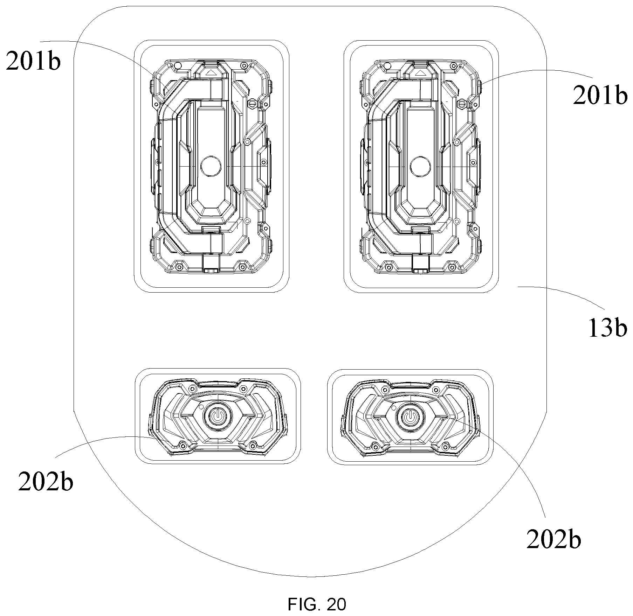

In some examples, the first energy storage device 21b and the second energy storage device 22b are adjacent to each other. Referring to FIGS. 16 and 17, the first energy storage device 21b is disposed on the front side of the second energy storage device 22b. Specifically, the first energy storage device 21b includes a first energy storage unit 201b, the second energy storage device 22b includes multiple second energy storage units 202b, and the multiple second energy storage units 202b are sequentially arranged along a left and right direction. In some examples, referring to FIG. 18, the first energy storage device 21b is disposed on the front side of the second energy storage device 22b. Specifically, the first energy storage device 21b includes multiple first energy storage units 201b, and the multiple first energy storage units 201b are sequentially arranged along the left and right direction. The second energy storage device 22b includes multiple second energy storage units 202b, and the multiple second energy storage units 202b are sequentially arranged along the left and right direction. Of course, the first energy storage units 201b and the second energy storage units 202b may have other arrangements. In some examples, referring to FIG. 19, the first energy storage device 21b is disposed on the rear side of the second energy storage device 22b, and multiple second energy storage units 202b are sequentially arranged along the left and right direction. Of course, in the above example, the second energy storage units 202b may be sequentially arranged along an up and down direction. In some examples, referring to FIG. 20, the first energy storage device 21b is disposed on the rear side of the second energy storage device 22b. Specifically, the first energy storage device 21b includes multiple first energy storage units 201b, and the multiple first energy storage units 201b are sequentially arranged along the left and right direction. The second energy storage device 22b includes multiple second energy storage units 202b, and the multiple second energy storage units 202b are sequentially arranged along the left and right direction. In the preceding examples, the first energy storage unit 201b of the first energy storage device 21b includes lithium iron phosphate cells, and the second energy storage unit 202b includes lithium cells. Specifically, the first energy storage unit 201b is a battery pack whose energy is greater than or equal to 1.5 kWh. In some examples, the first energy storage unit 201b is a battery pack whose energy is greater than or equal to 2 kWh. In some examples, the first energy storage unit 201b is a battery pack whose energy is greater than or equal to 4 kWh. In some examples, the second energy storage unit 202b is a battery pack whose energy is greater than or equal to 0.1 kWh. In some examples, the second energy storage unit 202b is a battery pack whose energy is greater than or equal to 0.4 kWh. In some examples, the second energy storage unit 202b is a battery pack whose energy is greater than or equal to 0.6 kWh.

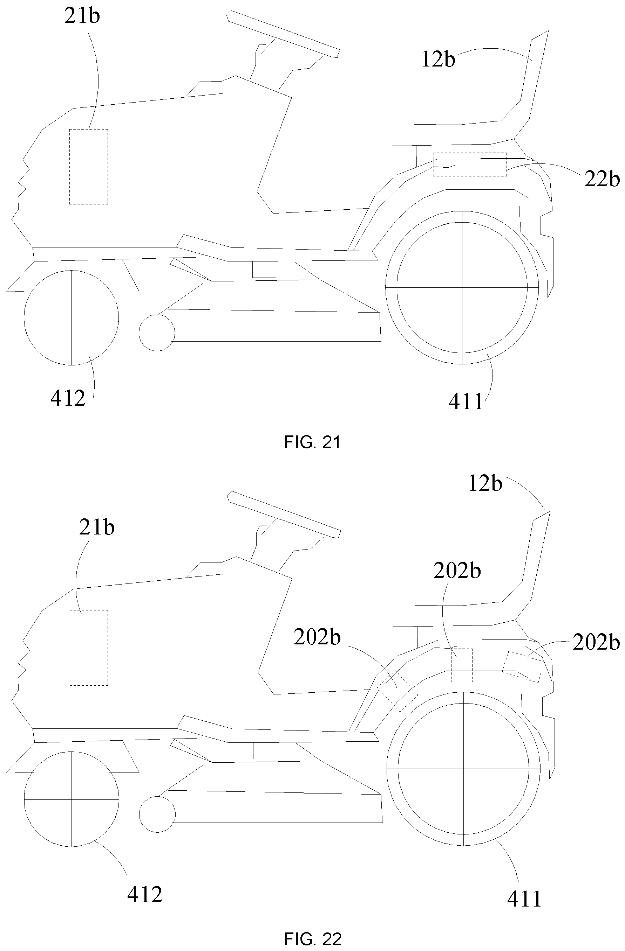

In some examples, unlike the preceding examples, the first energy storage device 21b and the second energy storage device 22b are disposed separately. Referring to FIG. 21, the first energy storage device 21b is disposed in the vicinity of the front walking wheels 412, and the second energy storage device 22b is disposed in the vicinity of the rear walking wheels 411. Specifically, the front walking wheels 412 include a left walking wheel and a right walking wheel, and the first energy storage device 21b is at least partially disposed between the left walking wheel and the right walking wheel. The second energy storage device 22b includes at least one second energy storage unit 202b, and the second energy storage unit 202b may be disposed below the support 12b. In this manner, the center of gravity of the whole machine along the front and rear direction can be as close as possible to the support 12b and the front walking wheels 412 so that the front end of the outdoor work vehicle 100b can be effectively prevented from lifting during uphill climbing. Moreover, the positive pressure of the front walking wheels 412 on the ground can be increased, and thus the roadholding of the front walking wheels 412 can be increased, thereby preventing the riding outdoor work vehicle 100b from slipping during walking on the ground. Further, in particular, when a grass collecting device is provided at the rear end of the outdoor work vehicle 100b, the structure in which the second energy storage device 22b is disposed on the lower side of the support 12b can effectively lower the center of gravity of the outdoor work vehicle 100b, thereby improving the stability of the whole machine.

Of course, the second energy storage unit 202b may be disposed on the left or right side of the support 12b and at least partially located on the radially outer side of the rear walking wheels 411. FIG. 22 shows multiple possible positions of the second energy storage unit 202b. For example, the second energy storage unit 202b may be disposed above the rear walking wheels 411.

In the examples of the present application, the first energy storage device is configured to be a power supply device matching the outdoor work vehicle, and the second energy storage device is configured to be a power supply device matching both the outdoor work vehicle and other external powered devices. In this manner, the outdoor work vehicle can not only satisfy the requirement for working outdoors for a relatively long time but also have improved adaptability. The external powered devices include a handheld power tool, a table tool, an electric wheeled device, a lighting device, and a fan. It is to be understood that when a professional user goes out to mow grass, the professional user needs to use a handheld tool to assist in handling a corner region that is difficult to handle by the outdoor work vehicle, and when a battery pack of the handheld tool is out of power, the second energy storage device may be removed from the outdoor work vehicle and mounted to the handheld tool to supply power to the handheld tool. Of course, the user may also remove the battery pack of the handheld tool and mount the battery pack to the outdoor work vehicle to supply power.

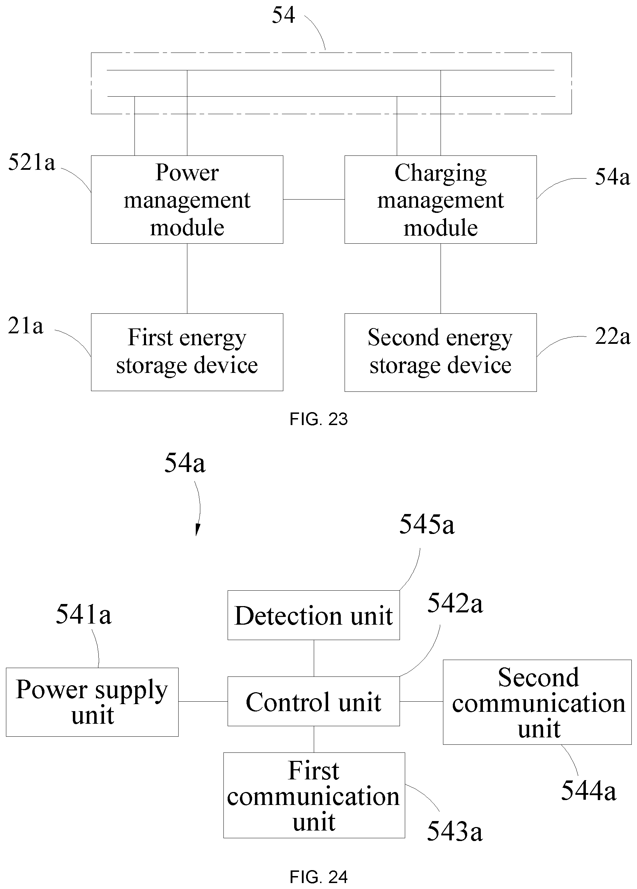

FIG. 23 shows an electrical schematic of a first energy storage device 21a of the outdoor work vehicle 100 charging a second energy storage device 22a. Specifically, the outdoor work vehicle 100 is specifically an electric mower. In some examples, the first energy storage device 21a can supply electrical energy to the second energy storage device 22a to charge the second energy storage device 22a, and the second energy storage device 22a does not discharge when mounted to the vehicle. In particular, it is to be understood that the first energy storage device 21a includes at least the first energy storage device 21 and the first energy storage device 21b in the preceding examples. It is to be understood that the second energy storage device 22a includes at least the second energy storage device 22 and the second energy storage device 22b in the preceding examples.

Specifically, the first energy storage device 21a is connected to a power management module 521a, the second energy storage device 22a is connected to a charging management module 53a, and the power management module 521a and the charging management module 53a communicate via a communication bus 54. Specifically, positive and negative power lines, a communication signal line, and a wake-up line are connected between the first energy storage device 21a and the power management module 521a. The power management module 521 is powered by the first energy storage device 21a. The charging management module 53a is powered by the power management module 521a.

In some examples, data transmitted by the power management module 521a to the communication bus 54 includes at least whether the second energy storage device 22a can be charged. The charging management module 53a receives the data from the communication bus 54 and determines whether the second energy storage device 22a can be charged. After receiving chargeable data from the communication bus 54, the charging management module 53a charges the second energy storage device 22a connected thereto in the case where the power management module 521a can normally output a voltage of 56 V. In this manner, electrical energy in the first energy storage device 21a can be transmitted to the second energy storage device 22a through the power management module 521a and the charging management module 54a.

In some examples, an external power supply is connected to the outdoor work vehicle and can charge the first energy storage device 21a and the second energy storage device 22a. In some examples, the external power supply is connected to the outdoor work vehicle, can charge only the first energy storage device 21a mounted to the outdoor work vehicle, and cannot charge the second energy storage device 22a mounted to the outdoor work vehicle.

In some examples, the first energy storage device 21a in a discharged state can charge the second energy storage device 22a. In some examples, when the power management module 53a has electrical energy output, the first energy storage device 21a can charge the second energy storage device 22a. In some examples, when the outdoor work vehicle is in a standby state, that is, when the first energy storage device 21a has current output, the power management module 53a has electrical energy output, and the first energy storage device 21a charges the second energy storage device 22a through the power management module 521a and the charging management module 54a. In some examples, when the outdoor work vehicle is in a working state, that is, when the outdoor work vehicle is implementing a walking function, a mowing function, a snow clearing function, a lighting function, or the like, that is, when the first energy storage device 21a has current output, the power management module 53a has electrical energy output, and the first energy storage device 21a charges the second energy storage device 22a through the power management module 521a and the charging management module 54a. Of course, in some examples, when the remaining power of the first energy storage device 21a is low, the first energy storage device 22a is forbidden from charging the second energy storage device.

After the second energy storage device 22a is mounted to the outdoor work vehicle, as long as the first energy storage device 21a is in the discharged state, the second energy storage device 22a can acquire the electrical energy in the first energy storage device 21a to be charged. In this manner, the user does not need to wait and can take the second energy storage device 22a on the outdoor work vehicle at any time to supply power to another power tool, the fan, or the lighting device. In some examples, the power tool includes, but is not limited to, a handheld power tool such as an electric drill, an electric wrench, an electric screwdriver, an electric hammer drill, an electric circular saw, or a sander, a table power tool such as a table saw, or an outdoor tool such as a manned mower, a smart mower, a string trimmer, electric shears, a hedge trimmer, or an electric saw.

Referring to FIG. 24, the charging management module 54a includes a power supply unit 541a, a control unit 542a, a first communication unit 543a, and a second communication unit 544a. The first communication unit 543a is configured to communicate with the second energy storage device 22a to implement information interaction. The second communication unit 544a communicates with the communication bus 54 and is configured to implement information interaction with the power management module 521a. The power supply unit 541a is configured to convert an output voltage of the power management module 521a, for example, convert a 56 V voltage output from the power management module into a 12 V voltage, a 3.3 V voltage, or the like. The control unit 542a is configured to control the charging of the second energy storage device 22a, including determination of whether charging can be performed and charging protection. The second communication unit 544a receives or transmits data via the communication bus 54 to perform output transmission with the power management module 521a. In some examples, the charging management module 54a further includes a detection unit 545a configured to determine whether the second energy storage device 22a is inserted. Additionally, the detection unit 545a is further configured to sample a voltage and a current of a charging circuit to implement current detection and protection. The detection unit 545a can also sample the temperature of a switching element in the circuit to implement overtemperature protection.

In some examples, as shown in FIGS. 9 and 10, the outdoor work vehicle 100 includes a first receiving region 151 and a second receiving region 152, where the first receiving region 151 is used for receiving the first energy storage device 21, and the second receiving region 152 is used for receiving the second energy storage device 22a. The first energy storage device 21 is configured to charge the second energy storage device 22a while supplying power to the walking motor. The second energy storage device 22a can supply power to the external powered device. The external device includes a power tool with a motor, the lighting device, or a device with a charging interface. The first energy storage device 21 includes at least one battery pack each having energy greater than or equal to 1.5 kWh. The second energy storage device 22 includes at least one battery pack each having energy greater than or equal to 0.1 kWh. In some examples, the second receiving region 152 further includes a storage space 141a. In some examples, the second receiving region 152 further includes a coupling portion for connecting the second energy storage device 22, and the coupling portion is provided with electrical terminals and a communication terminal which are electrically and communicatively connected to the second energy storage device 22. The second energy storage device 22a is detachably mounted to the coupling portion. In some examples, the outdoor work vehicle 100 is further provided with a charging management circuit board, and the charging management module 54a is disposed on the charging management circuit board and configured to control the charging of the second energy storage device 22a connected to the coupling portion. In some examples, the charging management circuit board is disposed in the vicinity of the coupling portion. In some examples, the charging management circuit board may be disposed in the vicinity of the power management module 521a. The charging management module is adjacent to the power management module. In some examples, the charging management circuit board may be further configured to arrange the power management module 521a.

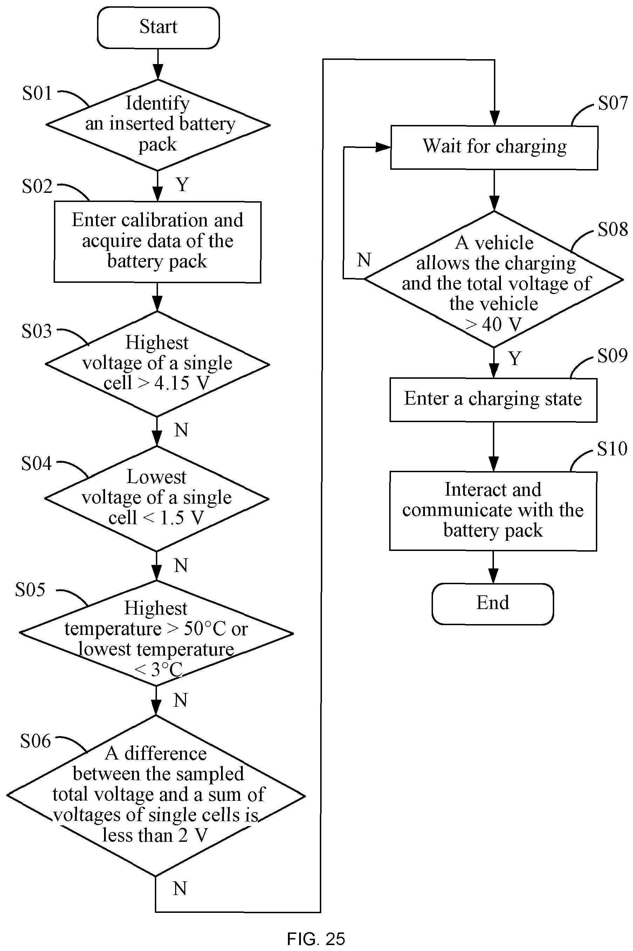

FIG. 25 is a flowchart of a control method for charging the second energy storage device 22a by the first energy storage device 21a. The charging includes the steps below.

In S01, an inserted battery pack is identified.

The charging management module 54a identifies whether the second energy storage device 22a is connected to a coupling portion 23a.

In S02, calibration starts and data of the battery pack is acquired.

After identifying that the battery pack is connected, the charging management module 54a detects or reads the data of the battery pack connected to the coupling portion 23a. The data includes, but is not limited to, a highest voltage of a single cell in the battery pack, a lowest voltage of a single cell, a highest temperature of a cell, a lowest temperature of a cell, and a total voltage.

In S03, when it is determined that the acquired highest voltage of a single cell in the battery pack is not greater than a first voltage threshold, step S04 is performed. Otherwise, step S02 is performed.

In some examples, the first voltage threshold may be set to 4.1 V, 4.15 V, or 4.2 V.

In S04, when it is determined that the acquired lowest voltage of a single cell in the battery pack is not less than a second voltage threshold, step S05 is performed. Otherwise, step S02 is performed.

In some examples, the second voltage threshold may be set to 1.4 V, 1.5 V, or 1.6 V.

S05, when it is determined that the acquired highest temperature of the battery pack is not higher than a first temperature threshold or the lowest temperature is not lower than a second temperature threshold, step S06 is performed. Otherwise, step S02 is performed.

In some examples, the first temperature threshold may be set to 48°C, 50°C, or 52°C. In some examples, the second temperature threshold may be set to 0°C, 3°C, or 5°C.

In S06, when it is determined that a difference between the read total voltage of the battery pack and a sum of detected single-cell voltages is not greater than a third voltage threshold, step S07 is performed. Otherwise, step S02 is performed.

In some examples, the third voltage threshold may be set to 1 V, 2 V, or 3 V.

In S07, the charging management module waits for the charging and performs step S08.

In S08, it is determined that the vehicle allows the charging and the output voltage of the power management module 521a is greater than a fourth voltage threshold. If so, step S09 is performed. If not, step S07 is performed.

In some examples, the fourth voltage threshold may be set to 38 V, 40 V, or 42 V.

In S09, the charging management module enters a charging state and performs step S10.

In S10, the charging process is performed.

In some examples, the charging management module 54a further includes a voltage conversion unit 546a. In the charging process, the charging management module 54a controls a working state of the voltage conversion unit 546a according to a given charging strategy of the battery pack to convert the output voltage of the power management module 521a.

In the present application, when the first energy storage device 21a is in the discharged state and the vehicle has no other abnormal faults, the second energy storage device 22a can acquire energy in the first energy storage device 21a to be charged after connected to the coupling portion 23a. In this manner, the user can fulfill the plug and charge of the battery pack without unnecessary trigger conditions, ensuring that the battery pack can be taken and used at any time when the battery pack is in need and improving the working efficiency.

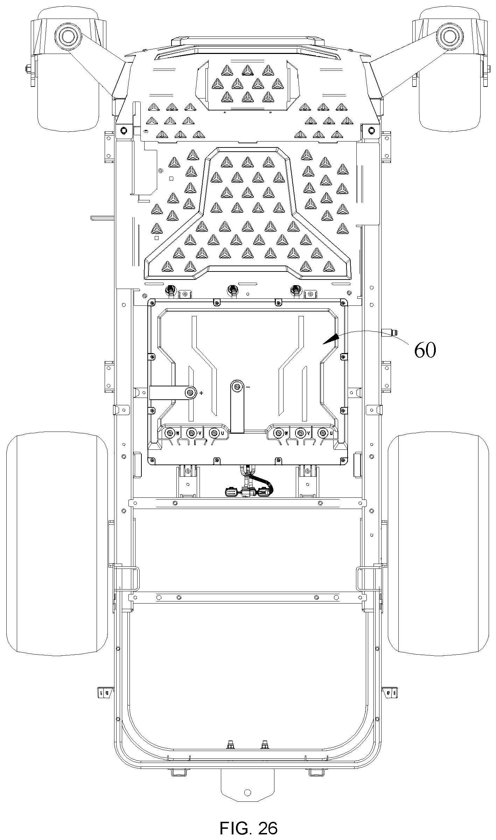

In some examples, referring to FIG. 26, an outdoor traveling device 100 further includes a control assembly 60 configured to at least control the operation of the walking motor 42. The control assembly 60 is at least partially disposed on the lower side of the support 12 and serves as a control hub to control the operation of elements electrically connected to the control assembly 60 in the whole outdoor traveling device 100. The control assembly 60 may control the operation of the outdoor traveling device 100 according to a set direction, speed, response time, and the like. The control assembly 60 includes a control chip such as a microcontroller unit (MCU) or an Advanced RISC Machine (ARM). Optionally, the control assembly 60 is disposed at a middle position of the frame 11 so that the wiring distances of connection lines for connecting the elements to the control assembly 60 can be reduced to the maximum extent.

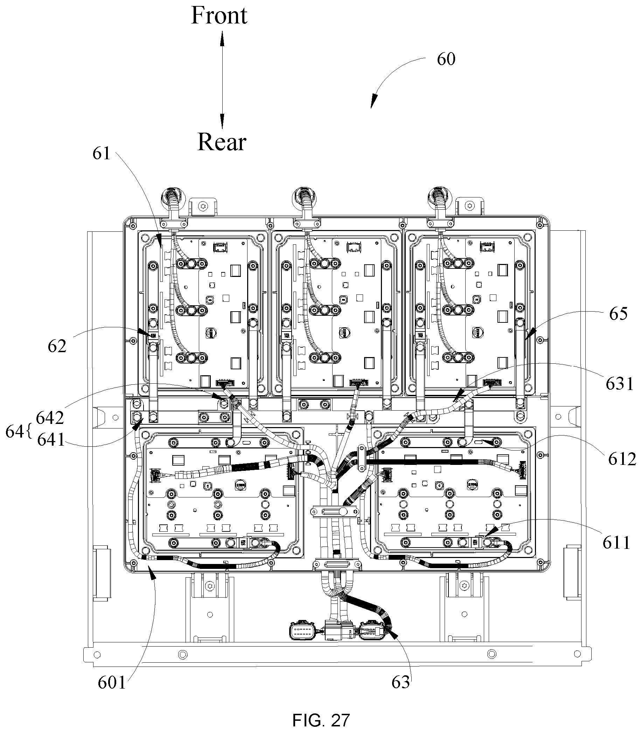

In some examples, the control assembly 60 includes multiple control modules 61, fuses 62, and a communication line 63, and the multiple control modules 61, fuses 62, and communication line 63 are all disposed in a housing 601 of the control assembly 60. A fuse 62 is disposed on each of the multiple control modules 61, and the multiple control modules 61 are connected via the communication line 63 to perform communication transmission. Optionally, the multiple control modules 61 serve as at least one control module, and positions of the control modules 61 on the control assembly 60 are determined based on elements correspondingly controlled by the control modules 61. As shown in FIG. 27, when the outdoor traveling device 100 is the riding mower, five control modules 61 are disposed on the control assembly 60, where three control modules 61 are configured to control the mowing assembly, and two control modules 61 are configured to control the walking motors 42. Since the mowing assembly is disposed at the front end of the control assembly 60 and the walking motors 42 are disposed at the rear end of the control assembly 60 relative to the control assembly 60, the three control modules 61 for controlling the mowing assembly are disposed at the front end of the control assembly 60, and the two control modules 61 for controlling the walking motors 42 are disposed at the rear end of the control assembly 60 so that the lengths of connection lines for connecting the control modules 61 to the mowing assembly can be effectively reduced, and the lengths of connection lines for connecting the control modules 61 to the walking motors 42 can be effectively reduced. In this manner, an arrangement of lines can be effectively simplified, space can be fully utilized, and wiring complexity can be reduced; moreover, maintenance can be facilitated. It is to be understood that a fault can be positioned quickly on a relatively short connection line, thereby greatly shortening a maintenance time and enhancing the continuity with which the user operates the outdoor traveling device 100. Additionally, one control module 61 may control the mowing assembly, and one control module 61 may control the walking motors 42; or a number of control modules 61 may control the mowing assembly, and a number of control modules 61 may control the walking motors 42, where the numbers are not limited in the present application. In some examples, when the outdoor traveling device 100 is not the riding mower, that is, when the outdoor traveling device 100 does not include the mowing assembly, at least one control module 61 may control the outdoor traveling device 100 to walk.

As shown in FIG. 27, each control module 61 includes a power input terminal 611 and a power output terminal 612, and the fuse 62 is disposed on the power input terminal 611 of the control module 61 and configured to protect a driver circuit and prevent an overload current from damaging the circuit or the motor. The fuse 62 is separately disposed on each control module 61 so that a connection line between the fuse 62 and each control module 61 is relatively short and simple, facilitating the repair or maintenance of the user.

As shown in FIG. 27, the communication line 63 includes multiple communication sublines 631, and each communication subline 631 is separately connected to the control module 61, that is, the multiple control modules 61 are separately connected to the communication line 63 through the communication sublines 631 so that each control module 61 can transmit its communication information to the communication line 63 via the communication subline 631, and the communication line 63 transmits the communication information of the control module 61 to another control module 61, thereby achieving communication between the multiple control modules 61. Alternatively, the communication line 63 acquires communication information and transmits the communication information to the multiple control modules 61 via the communication sublines 631. The number of communication sublines 631 needs to be greater than or equal to the number of control modules 61. In this example, five communication sublines 631 may be provided.

As shown in FIG. 27, the control assembly 60 further includes a power busbar assembly 64, the multiple control modules 61 are separately connected to the power busbar assembly 64, and the power busbar assembly 64 is configured to supply power to the multiple control modules 61. The power busbar assembly 64 includes a positive electrode busbar 641 and a negative electrode busbar 642, the positive electrode busbar 641 is a positive electrode copper busbar, and the negative electrode busbar 642 is a negative electrode copper busbar. Power input terminals 611 of the multiple control modules 61 are connected to the positive electrode busbar 641, and power output terminals 612 of the multiple control modules 61 are connected to the negative electrode busbar 642. To reduce connection lines between the control modules 61 and the power busbar assembly 64, the multiple control modules 61 may each be connected to the power busbar assembly 64 via a copper busbar 65. As shown in FIG. 6, the power output terminals 612 of the five control modules 61 are each connected to the negative electrode busbar 642 via the copper busbar 65, and power input terminals 611 of the three control modules 61 at the front end of the control assembly 60 are each connected to the positive electrode busbar 641 via the copper busbar 65. Since power input terminals 611 of the two control modules 61 at the rear end of the control assembly 60 are relatively away from the positive electrode busbar 641, considering an arrangement of elements of the whole control assembly 60, the power input terminals 611 of the two control modules 61 are connected to the positive electrode busbar 641 via connection lines. Additionally, the multiple control modules 61 may be connected to the positive electrode busbar 641 via connection lines, which is not limited in the present application.

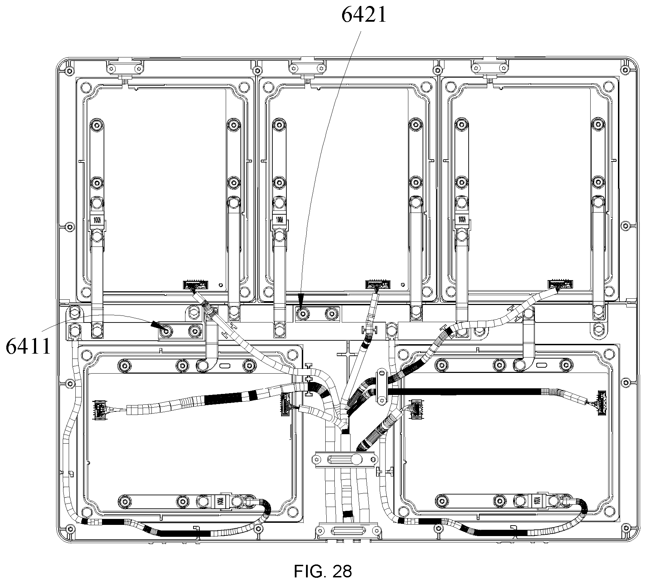

As shown in FIG. 28, the positive electrode busbar 641 includes a first port 6411, the negative electrode busbar 642 includes a second port 6421, and the first port 6411 and the second port 6421 are connected to the power management module (not shown in the figure) so that the power management module supplies power to the multiple control modules 61 through the power busbar assembly 64. The power management module is disposed on the upper side of the control assembly 60 and the lower side of the support 12 so that the distance between the control assembly 60 and the power management module is relatively short, a connection line between the power management module and the control assembly 60 is relatively short, an arrangement of lines of the whole control assembly 60 is simplified, and the complexity of assembly and maintenance can be effectively reduced. The power management module includes a control chip such as an MCU or an ARM.

The fuse is separately disposed on each control module, and the communication between the multiple control modules is implemented through the communication line, optimizing the layout of elements and reducing the number of connection lines and the number of elements. Meanwhile, the power busbar assembly using copper busbars is connected to the external power management module to supply power to the control assembly, and the multiple control modules are each connected to the power busbar assembly via the copper busbar to acquire power, further reducing the number of connection lines and the number of elements. Thus, the structure of the control assembly is more compact, and a production cost is reduced. Additionally, since the number of connection lines and the number of elements are reduced and the connection lines are relatively short, the complexity of assembly and maintenance of the control assembly is reduced, and the maintenance of the control assembly is facilitated, thereby improving the reliability of the control assembly.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. An outdoor work vehicle, comprising:
a walking wheel group comprising rear walking wheels and front walking wheels, wherein the rear walking wheels comprise a first rear walking wheel and a second rear walking wheel;
a frame connected to the walking wheel group;
a support mounted to the frame and configured to support an operator;
a walking motor having a drive shaft and configured to drive the walking wheel group; and
a first energy storage device comprising at least one first energy storage unit and at least one second energy storage unit;
wherein at least one of the at least one first energy storage unit and at least one of the at least one second energy storage unit are located between the first rear walking wheel and the second rear walking wheel and in a region on a rear side of the walking motor and have different energy.

2. The outdoor work vehicle according to claim 1, wherein the at least one first energy storage unit is disposed on a rear side of the at least one second energy storage unit in a front and rear direction.

3. The outdoor work vehicle according to claim 1, wherein the at least one second energy storage unit is disposed on a left or right side of the at least one first energy storage unit in a left and right direction.

4. The outdoor work vehicle according to claim 1, wherein energy of each of the at least one first energy storage unit is greater than or equal to energy of each of the at least one second energy storage unit.

5. The outdoor work vehicle according to claim 1, further comprising a second energy storage device at least detachably and electrically connected to the outdoor work vehicle, wherein the second energy storage device is configured to be detachable from the outdoor work vehicle to supply power to an external electric device.

6. The outdoor work vehicle according to claim 5, wherein the second energy storage device is at least partially disposed above the walking wheel group.

7. The outdoor work vehicle according to claim 5, wherein the second energy storage device is at least partially disposed on a front or rear side of an axle between the first rear walking wheel and the second rear walking wheel.

8. The outdoor work vehicle according to claim 5, wherein the second energy storage device is at least partially disposed below the support.

9. The outdoor work vehicle according to claim 5, wherein the second energy storage device comprises a third energy storage unit, and the third energy storage unit has less energy than each of the at least one first energy storage unit.

10. The outdoor work vehicle according to claim 9, wherein energy of the third energy storage unit is less than or equal to energy of each of the at least one second energy storage unit.

11. The outdoor work vehicle according to claim 9, wherein the at least one first energy storage unit is capable of supplying power to at least the third energy storage unit or the walking motor.

12. The outdoor work vehicle according to claim 9, wherein each of the at least one first energy storage unit comprises a battery pack whose energy is greater than or equal to 1.5 kWh, and each of the at least one second energy storage unit or the third energy storage unit comprises a battery pack whose energy is greater than or equal to 0.1 kWh.

13. The outdoor work vehicle according to claim 5, wherein the first energy storage device is configured to charge the second energy storage device while supplying power to the walking motor.

14. The outdoor work vehicle according to claim 5, further comprising a first receiving region for receiving the first energy storage device and a second receiving region for receiving the second energy storage device, wherein the second energy storage device is configured to be forbidden from discharging when accommodated in the second receiving region.

15. The outdoor work vehicle according to claim 1, further comprising a first circuit board assembly and a second circuit board assembly, wherein the first circuit board assembly is configured to at least control operation of the walking motor, the second circuit board assembly comprises a power management module, and a projection of the first circuit board assembly on a first plane supporting the walking wheel group at least partially coincides with a projection of the second circuit board assembly on the first plane.

16. An outdoor work vehicle, comprising:
a walking wheel group comprising a first walking wheel and a second walking wheel;
a frame connected to the first walking wheel and the second walking wheel;
a support mounted to the frame and configured to support an operator;
a walking motor for driving the walking wheel group; and
a first energy storage device comprising a plurality of first energy storage units configured to at least supply electrical energy to the walking motor;
wherein the first energy storage device is at least partially located between the first walking wheel and the second walking wheel, the plurality of first energy storage units are arranged in different manners, and energy of at least one of the plurality of first energy storage units is greater than or equal to 1.5 kWh.

17. The outdoor work vehicle according to claim 16, further comprising a second energy storage device at least detachably and electrically connected to the outdoor work vehicle, wherein the second energy storage device is configured to be detachable from the outdoor work vehicle to supply power to an external electric device.

18. The outdoor work vehicle according to claim 17, wherein a projection of the second energy storage device along an up and down direction does not overlap a projection of an axle along the up and down direction.

19. The outdoor work vehicle according to claim 17, wherein the second energy storage device is configured to be detachable from the outdoor work vehicle to supply power to the external electric device.

20. The outdoor work vehicle according to claim 16, wherein at least one of the plurality of first energy storage units is detachably mounted to the outdoor work vehicle.
